# EUROPEAN PATENT SPECIFICATION

(11) **EP 3 811 774 B1**
(45) Date of publication and mention of the grant of the patent: **04.09.2024**
(21) Application number: 19878885.3
(22) Date of filing: 16.07.2019
(51) Int. Cl.: A01G 31/02, A01G 24/44

(54) **SEEDLING RAISING BLOCK**
SETZLINGAUFZUCHTBLOCK
BLOC DE CULTURE DE SEMIS

(30) Priority: 30.10.2018 CN 201811274226
(43) Date of publication of application: 28.04.2021
(73) Proprietor: Fujian Sanan Sino-Science Photobiotech Co., Ltd., Quanzhou, Fujian 362411 (CN)
(72) Inventor: LI, Shaohua, Quanzhou, Fujian 362411 (CN); GONG, Huaqin, Quanzhou, Fujian 362411 (CN); CHEN, Ying, Quanzhou, Fujian 362411 (CN)
(74) Representative: Valea AB
(86) International application number: PCT/CN2019/096134
(87) International publication number: WO 2020/087986

(56) References cited:
- CN-A- 106 857 221
- CN-A- 106 879 394
- CN-A- 109 220 761
- CN-U- 205 408 958
- CN-U- 206 713 558
- CN-U- 209 314 520
- JP-A- H05 328 856
- NL-A- 7 806 949
- No further relevant documents disclosed

## Description

### BACKGROUND

### Technical Field

The present invention relates to a soilless culture technology, and particularly relates to a nursery block.

### Related Art

In the sowing stage of hydroponic vegetables, sponge blocks are used as sowing carriers of seeds. After sowing, the seeds are manually pressed into the sponge blocks for full contact with the sponge blocks. Attributing to a certain degree of water absorption, the sponge blocks can maintain humidity of the seeds and the roots of seedlings. However, the tops of the sponge blocks currently used for sowing are flat, so the seeds are easy to roll and scatter after sowing, and workers need to manually press the seeds into the sponge blocks, which causes low sowing efficiency and difficult mechanical operation.

CN 205 408 958 U discloses a nursery block which can retain water. Another example of a plant holding device can be found in the document CN104604663B.

### SUMMARY

In view of the above defects in the prior art, the technical problem to be solved by the present invention is to provide a nursery block which can improve the sowing efficiency, stabilize and moisten seeds and improve the overall germination rate and germination uniformity of the seeds, and is convenient for mechanized sowing. The present invention provides a nursery block according to claim 1. Some features of optional or preferred embodiments are recited in the dependent claims.

In order to solve the above technical problem, the present invention provides a nursery block, including a nutritive block for providing nutrients to seeds. The top of the nutritive block is provided with a seed placement pit, the seed placement pit is internally provided with a seed cultivation pit, the seed placement pit is of a structure having a top larger than a bottom so that the seeds fall into the seed cultivation pit along the surface of the seed placement pit under the action of gravity, and the seed cultivation pit is internally provided with a notch which extends in a direction away from the seed cultivation pit and provides growth paths for root systems of the seeds.

Preferably, the notch is radial.

Preferably, the radial shape is a cross shape.

Preferably, the seed placement pit is spherical.

Preferably, the bottom of the seed cultivation pit is spherical.

Preferably, the nutritive block is made of a water-absorbing material.

Preferably, the nutritive block is made of an elastic material.

Preferably, the nutritive block is rectangular or cylindrical.

Preferably, the seed cultivation pit is located in the center of the seed placement pit.

Preferably, the notch penetrates downward to the bottom of the nutritive block.

As mentioned above, the nursery block of the present invention has the following beneficial effects: in the present invention, the top of the nutritive block is provided with the seed placement pit, which can prevent the seeds from arbitrarily rolling and falling off from the nutritive block after sowing, and the seed placement pit is of a structure with a big top and a small bottom so that the seeds fall into the seed cultivation pit along the surface of the seed placement pit under the action of gravity. In this way, there is no need for workers to manually press the seeds into the nutritive block, so that the processes are reduced, the sowing efficiency is improved, and the nursery block is especially suitable for sowing with a sowing machine. The size of the seed cultivation pit is adapted to the size of the seeds so as to achieve the effects of stabilizing and moistening the seeds. In addition, since the seed cultivation pit is designed in advance, the buried depth of all seeds can be controlled uniformly, and the overall germination rate and germination uniformity of the seeds can be improved, so as to improve the mechanization and standardization of seed sowing.

### BRIEF DESCRIPTION OF THE DRAWINGS

FIG. 1 shows a schematic view of a nursery block of the present invention.
FIG. 2 shows a top view of the nursery block of the present invention.
FIG. 3 shows a cross-sectional view of the nursery block of the present invention.
FIG. 4 shows a schematic view of sowing with a sowing machine.
FIG. 5 shows YouYa growth conditions under different nursery blocks.

### List of Reference Numerals

- 1: Nutritive block
- 2: Seed placement pit
- 3: Seed cultivation pit
- 4: Notch
- 5: Sowing machine
- 6: Sowing arm

### DETAILED DESCRIPTION

The following describes implementations of the present invention by using specific embodiments. A person skilled in the art may easily understand other advantages and effects of the present invention from the content disclosed in this specification.

It should be noted that the structures, proportions, sizes, and the like shown in the drawings of the specification, in coordination with the content disclosed in the specification, are only used to help a person skilled in the art to read and understand, and they are not intended to limit the conditions under which the present invention can be implemented and therefore have no technical significance. Any modifications to the structure, changes to the proportional relationship or the adjustment on the size should fall within the scope of the technical content disclosed by the present invention without affecting the effects and the objectives that can be achieved by the present invention. In addition, the terms such as "upper", "lower', "left", "right", "middle", and "a" mentioned in this specification are also merely for facilitating clear descriptions, but are not intended to limit the scope of implementation of the present invention. Without substantially changing the technical contents, changes or adjustments of relative relationships thereof should also fall within the scope of implementation of the present invention.

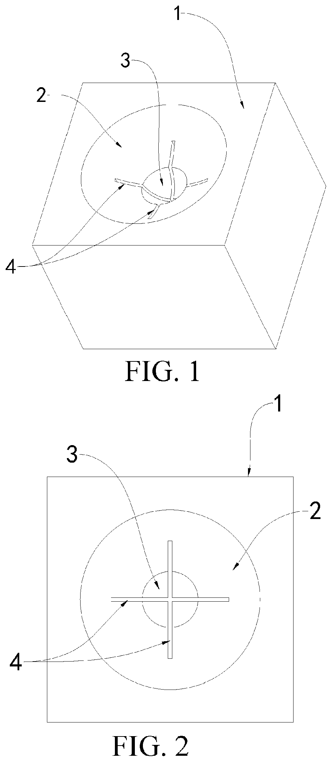

As shown in FIG. 1, FIG. 2 and FIG. 3, the present invention provides a nursery block, including a nutritive block 1 for providing nutrients to seeds. The top of the nutritive block 1 is provided with a seed placement pit 2. The seed placement pit 2 is internally provided with a seed cultivation pit 3. The seed placement pit 2 is of a structure with a big top and a small bottom so that the seeds fall into the seed cultivation pit 3 along the surface of the seed placement pit 2 under the action of gravity. The seed cultivation pit 3 is internally provided with a notch 4 which extends in a direction away from the seed cultivation pit 3 and provides growth paths for root systems of the seeds.

In the present invention, the top of the nutritive block 1 is provided with the seed placement pit 2, which can prevent the seeds from arbitrarily rolling and falling off from the nutritive block 1 after sowing, and the seed placement pit 2 is of a structure with a big top and a small bottom so that the seeds fall into the seed cultivation pit 3 along the surface of the seed placement pit 2 under the action of gravity. In this way, there is no need for workers to manually press the seeds into the nutritive block 1, so that the processes are reduced, the sowing efficiency is improved, and the nursery block is especially suitable for sowing with a sowing machine. The size of the seed cultivation pit 3 is adapted to the size of the seeds so as to achieve the effects of stabilizing and moistening the seeds. In addition, since the seed cultivation pit 3 is designed in advance, the buried depth of all seeds can be controlled uniformly, and the overall germination rate and germination uniformity of the seeds can be improved, so as to improve the mechanization and standardization of seed sowing.

A specific use method of the nursery block of the present invention includes:
S1, a plurality of nursery blocks are arranged in a certain order; and
S2, seeds are placed in the seed placement pit 2 of the corresponding nursery block one by one by using a sowing machine, so that the seeds are easy to automatically roll into the seed cultivation pit 3 under the action of gravity.

In the above specific use method, since the seed placement pit 2 is much larger than the seed cultivation pit 3, the accuracy of placing seeds with the sowing machine is greatly reduced. At the same time, the seeds can automatically roll into the seed cultivation pit 3 by just placing the seeds with the sowing machine, which is favorable for improving the efficiency of mechanized sowing of large batches of nursery blocks. In addition, by virtue of cultivation, the germination rate of the seeds is high, and the germination uniformity of the seeds is also higher.

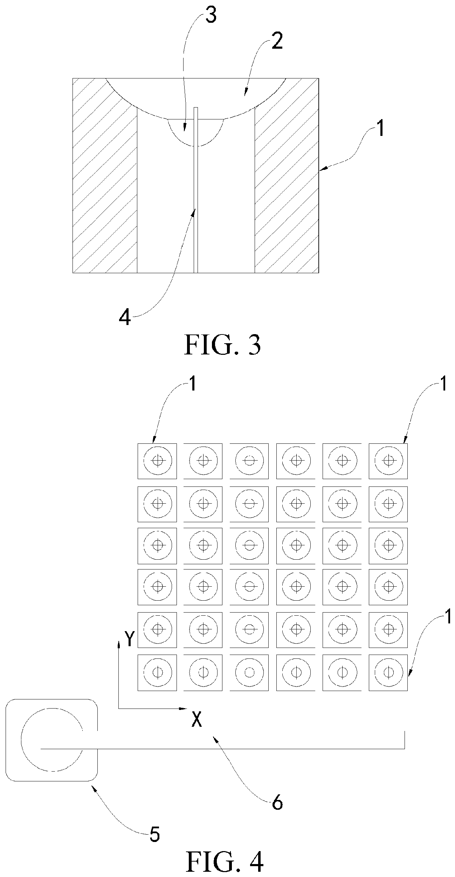

Specifically, FIG. 4 shows a schematic view (top view) of sowing with a sowing machine. In FIG. 4, there are nursery blocks arranged in a 6 x 6 array, the X axis is the row direction of the nursery blocks, and the Y axis is the column direction of the nursery blocks. The sowing machine 5 is provided with a sowing arm 6 for placing seeds into the nursery blocks, and the sowing arm 6 can simultaneously place seeds into at least one nursery block. For example, the sowing arm 6 of the sowing machine 5 is provided with six seed placement ends, and the six seed placement ends correspond to six nursery blocks located in the same row one to one. That is, the sowing arm 6 can simultaneously place seeds into the six nursery blocks. Since the seed placement pit 2 is much larger than the seed cultivation pit 3, the accuracy requirement for the placement position of the sowing arm 6 is smaller. In this way, the sowing machine 5 can quickly place six seeds into the seed placement pit 2 of the corresponding nursery block simultaneously, and then, the placed seeds automatically roll into the seed cultivation pit 3 of the corresponding nursery block. After the sowing arm 6 completes the seed placement task of one row of nursery blocks, the sowing machine 5 adjusts the sowing arm 6 to the top of another row of nursery blocks to place seeds, and so on. Therefore, the nursery block of the present invention is favorable for improving the efficiency of mechanized sowing of large batches of nursery blocks.

The seed placement pit 2 is of a structure with a big top and a small bottom. Specifically, the seed placement pit 2 may be in an inverted cone shape, an inverted pyramid shape, or a spherical shape. Since most seeds are spherical, in order to ensure the humidity or nutrition of the seeds, the bottom of the seed cultivation pit 3 may be in a spherical shape, an inverted cone shape, an inverted pyramid shape and a cylindrical shape, or a flat surface, or other shapes adapted to the size of the seeds.

A specific embodiment of the nursery block of the present invention is as follows: a hemispherical seed placement pit 2 (pit surface diameter is 1 to 1.5 cm, depth is 0.3 to 1 cm) is dug in the top of a nutritive block 1 in a size of 2 cm x 2 cm x 2 cm, and then, a cylindrical seed cultivation pit 3 (pit surface diameter is 0.4 to 0.8 cm, depth is 0.4 to 1 cm) is dug in the seed placement pit 2. When a worker manually or uses a sowing machine to place seeds into the seed placement pit 2, the seeds can automatically roll into the seed cultivation pit 3 under the action of gravity, and be firmly placed in the seed cultivation pit 3. Furthermore, the seed cultivation pit 3 is slightly larger than the seeds, so that it is easy for the seeds to maintain proper humidity in the seed cultivation pit 3.

Another specific embodiment of the nursery block of the present invention is as follows: a seed placement pit 2 in an inverted cone shape is dug in the top of the nutritive block 1, and then, a hemispherical seed cultivation pit 3 is dug in the seed placement pit 2. When a worker manually or uses a sowing machine to place seeds into the seed placement pit 2, the seeds can also automatically roll into the seed cultivation pit 3 under the action of gravity, and be firmly placed in the seed cultivation pit 3.

Since the root systems of the seeds grow in all directions, in order to provide more abundant growth paths for the root systems of the seeds, the notch 4 is radial. Further, in order to facilitate processing, the notch 4 may be in a straight shape or a cross shape. The notch 4 may also penetrate downward to the bottom of the nutritive block 1 or extend horizontally into the seed placement pit 2.

In order to achieve the purpose of providing nutrients (for example, water or other nutrient solutions containing fertilizers) to seeds, the nutritive block 1 is made of a water-absorbing material (for example, sponge).

In order to facilitate the placement, storage and arrangement of the nutritive block 1, the nutritive block 1 is in a rectangular shape (for example, a cuboid shape) or a cylindrical shape.

In order to facilitate the manufacture, the central axes of the seed placement pit 2, the seed cultivation pit 3 and the notch 4 are coincident.

In conclusion, the nursery block of the present invention can improve the sowing efficiency, stabilize and moisten seeds and improve the overall germination rate and germination uniformity of the seeds, and is convenient for mechanized sowing. Therefore, the present invention effectively overcomes various defects in the prior art and has high industrial value.

Test: sponge is used to prepare the nursery block of the present invention. There are three types of nursery blocks. The first type: the diameter of the seed cultivation pit is 4 mm. The second type: the diameter of the seed cultivation pit is 6 mm. The third type: the diameter of the seed cultivation pit is 8 mm. In addition, the same sponge is used to prepare a nursery block which is different from the nursery block of the present invention in that there is no seed cultivation pit. The affects of the above-mentioned different nursery blocks on seed germination and seedling growth are determined. There are four experiment groups. The planting conditions of YouYa lettuce seeds are shown in Table 1:

**Table 1 Affects of different sponge on seed germination and seedling growth**

| Variety | Treatment group | Fresh weight (g) | Plant height (cm) | Extension (cm) | Germination rate (%) |
|---|---|---|---|---|---|
| YouYa | Without seed cultivation pit (pilot sponge) | 0.33±0.09 | 6.76±1.14 | 4.92±0.70 | 59.00±8.04 |
| | 4 mm diameter seed cultivation pit | 0.35±0.07 | 7.38±0.80 | 4.60±1.10 | 96±5.65 |
| | 6 mm diameter seed cultivation pit | 0.38±0.05 | 7.26±0.65 | 5.87±0.80 | 92.33±3.51 |
| | 8 mm diameter seed cultivation pit | 0.37±0.03 | 7.75±0.69 | 6.73±0.92 | 95.60±6.36 |

It can be seen from Table 2 that when nursery blocks with 4 mm, 6 mm and 8 mm diameter seed cultivation pits are used, the YouYa germination rate is 90% or above, and the seedlings grow well. When the nursery block without the seed cultivation pit is used, the YouYa germination rate is only 59%.

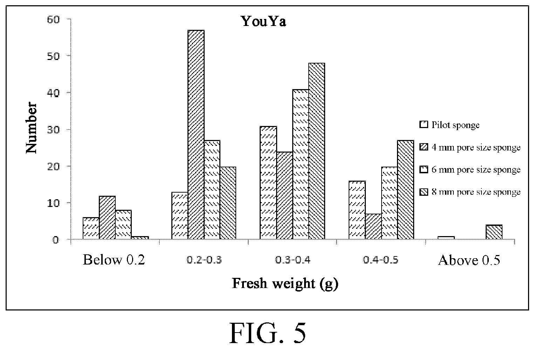

Seen from the YouYa fresh weight size on a seedling tray (as shown in FIG. 5), when the nursery block with a 4 mm diameter seed cultivation pit is used, 31% of YouYa seedlings are 0.3 g or above; when the nursery block with a 6 mm diameter seed cultivation pit is used, 61% of seedlings are 0.3 g or above; and when the nursery block with a 8 mm diameter seed cultivation pit is used, 79% of seedlings are 0.3 g or above. It can be seen that the nursery block with the 8 mm diameter seed cultivation pit is more favorable for seedling growth of YouYa seeds. On one hand, the nursery block with the 8 mm diameter seed cultivation pit has better water absorption and water retention, so that when the seeds fall into the pit, the seeds can absorb water easily. On the other hand, the diameter of the pit is larger, so that the wrong direction of the buds of the seeds can be avoided, and poor seedling growth caused by water shortage can be avoided.

In conclusion, compared with the nursery block without the seed cultivation pit, when the nursery block with the seed cultivation pit, prepared by the present invention, is used, the germination rate of YouYa seeds is higher, and seedlings are relatively uniform in size and have larger fresh weight.

The scope of the invention is defined only by the appended claims.

## Claims

1. A nursery block, comprising a nutritive block (1) for providing nutrients to seeds, wherein the top of the nutritive block (1) is provided with a seed placement pit (2), - and the seed placement pit (2) is of a structure having a top larger than a bottom, **characterized in that** the seed placement pit (2) is internally provided with a seed cultivation pit (3), the seeds fall into the seed cultivation pit (3) along the surface of the seed placement pit (2) under the action of gravity, and the seed cultivation pit (3) is internally provided with a notch (4) which extends in a direction away from the seed cultivation pit (3) and provides growth paths for root systems of the seeds.

2. The nursery block according to claim 1, **characterized in that** the notch (4) is radial.

3. The nursery block according to claim 2, **characterized in that** the radial shape is a cross shape.

4. The nursery block according to claim 1, **characterized in that** the seed placement pit (2) is spherical.

5. The nursery block according to claim 1, **characterized in that** the bottom of the seed cultivation pit (3) is spherical.

6. The nursery block according to claim 1, **characterized in that** that the nutritive block (1) is made of a water-absorbing material.

7. The nursery block according to claim 1, **characterized in that** the nutritive block (1) is made of an elastic material.

8. The nursery block according to claim 1, **characterized in that** the nutritive block (1) is rectangular or cylindrical.

9. The nursery block according to claim 1, **characterized in that** the seed cultivation pit (3) is located in the center of the seed placement pit (2).

10. The nursery block according to claim 1, **characterized in that** the notch (4) penetrates downward to the bottom of the nutritive block (1).

## Patentansprüche

1. Anzuchtblock, der einen Nährstoffblock (1) zur Bereitstellung von Nährstoffen für Saatgüter umfasst, wobei die Oberseite des Nährstoffblocks (1) mit einer Saatgutablagegrube (2) versehen ist und die Saatgutablagegrube (2) eine Struktur aufweist, bei der die Oberseite größer als die Unterseite ist, **dadurch gekennzeichnet, dass** die Saatgutablagegrube (2) im Inneren mit einer Saatgutkultivierungsgrube (3) versehen ist, wobei das Saatgut unter der Wirkung der Schwerkraft entlang der Oberfläche der Saatgutablagegrube (2) in die Saatgutkultivierungsgrube (3) fällt, und wobei die Saatgutkultivierungsgrube (3) innen mit einer Kerbe (4) versehen ist, die sich in einer Richtung weg von der Saatgutkultivierungsgrube (3) erstreckt und Wachstumswege für Wurzelsysteme der Saatgüter bereitstellt.

2. Anzuchtblock nach Anspruch 1, **dadurch gekennzeichnet, dass** die Kerbe (4) radial verläuft.

3. Anzuchtblock nach Anspruch 2, **dadurch gekennzeichnet, dass** die radiale Form eine Kreuzform ist.

4. Anzuchtblock nach Anspruch 1, **dadurch gekennzeichnet, dass** die Saatgutablagegrube (2) kugelförmig ist.

5. Anzuchtblock nach Anspruch 1, **dadurch gekennzeichnet, dass** der Boden der Saatgutkultivierungsgrube (3) kugelförmig ist.

6. Anzuchtblock nach Anspruch 1, **dadurch gekennzeichnet, dass** der Nährstoffblock (1) aus einem wasserabsorbierenden Material besteht.

7. Anzuchtblock nach Anspruch 1, **dadurch gekennzeichnet, dass** der Nährstoffblock (1) aus einem elastischen Material besteht.

8. Anzuchtblock nach Anspruch 1, **dadurch gekennzeichnet, dass** der Nährstoffblock (1) rechteckig oder zylindrisch ist.

9. Anzuchtblock nach Anspruch 1, **dadurch gekennzeichnet, dass** die Saatgutkultivierungsgrube (3) in der Mitte der Saatgutablagegrube (2) angeordnet ist.

10. Anzuchtblock nach Anspruch 1, **dadurch gekennzeichnet, dass** die Kerbe (4) nach unten bis zum Boden des Nährstoffblocks (1) durchdringt.

## Revendications

1. Bloc de pépinière, comprenant un bloc nutritif (1) pour fournir des nutriments aux graines, dans lequel le dessus du bloc nutritif (1) est pourvu d'une fosse de placement de graines (2), et la fosse de placement de graines (2) est de une structure ayant un sommet plus grand que un fond, **caractérisée en ce que** la fosse de placement de graines (2) est dotée intérieurement d'une fosse de culture de graines (3), les graines tombent dans la fosse de culture de graines (3) le long de la surface de la fosse de placement de graines (2) sous l'action de la gravité, et la fosse de culture de graines (3) est dotée intérieurement d'une encoche (4) qui s'étend dans une direction opposée à la fosse de culture de graines (3) et fournit des chemins de croissance pour les racines systèmes des graines.

2. Bloc de pépinière selon la revendication 1, **caractérisé en ce que** l'encoche (4) est radiale.

3. Bloc de pépinière selon la revendication 2, **caractérisé en ce que** la forme radiale est une forme en croix.

4. Bloc de pépinière selon la revendication 1, **caractérisé en ce que** la fosse de placement des graines (2) est sphérique.

5. Bloc de pépinière selon la revendication 1, **caractérisé en ce que** le fond de la fosse de culture des graines (3) est sphérique.

6. Bloc de pépinière selon la revendication 1, **caractérisé en ce que** le bloc nutritif (1) est réalisé dans un matériau absorbant l'eau.

7. Bloc de pépinière selon la revendication 1, **caractérisé en ce que** le bloc nutritif (1) est réalisé en un matériau élastique.

8. Bloc de pépinière selon la revendication 1, **caractérisé en ce que** le bloc nutritif (1) est rectangulaire ou cylindrique.

9. Bloc de pépinière selon la revendication 1, **caractérisé en ce que** la fosse de culture des graines (3) est située au centre de la fosse de placement des graines (2).

10. Bloc de pépinière selon la revendication 1, **caractérisé en ce que** l'encoche (4) pénètre vers le bas jusqu'au fond du bloc nutritif (1).
